# EUROPEAN PATENT APPLICATION

(11) **EP 3 306 430 A1**
(43) Date of publication of application: **11.04.2018**
(21) Application number: 16192376.8
(22) Date of filing: 05.10.2016
(51) Int. Cl.: G05D 1/02, B60K 7/00, G01M 17/007

(54) **RADIO-CONTROLLED DEVICE FOR DRIVING A WHEELED DUMMY VEHICLE**

(71) Applicant: Technische Hochschule Ingolstadt, 85049 Ingolstadt (DE)
(72) Inventor: Doric, Igor, 83301 Traunreut (DE); Lauerer, Christian, 85077 Manching-Westenhausen (DE); Brandmeier, Thomas, 93173 Wenzenbach Irlbach (DE)
(74) Representative: Lucke, Andreas

(57) **Abstract**

Provided is a radio-controlled device for driving a wheeled dummy vehicle along a trajectory, the device comprising attachment means for removably attaching the device to the dummy vehicle, a wheel, an electric motor having a rotor and a stator, and a radio receiver to control a rotational speed of the rotor relative to the stator by a radio signal, wherein the stator is connected to the attachment means and the rotor is connected to the wheel.

## Description

### FIELD

The present disclosure relates to dummy vehicles for testing driver assistance systems. In particular, the present disclosure relates to a radio-controlled device for driving a wheeled dummy vehicle along a trajectory.

### BACKGROUND

Modern vehicles are often equipped with a multitude of different sensors that allow monitoring the vehicle surroundings and assist the driver in potentially dangerous situations by providing warnings or temporarily controlling vehicle dynamics. In a next step, driver assistance systems may enable vehicles to drive autonomously with a driver resuming control only in case of malfunctions.

Testing the operability of such systems in real traffic may involve potentially dangerous situations, which makes it feasible to perform testing on specially prepared testing grounds using dummy vehicles, which allow for collisions without imposing considerable risk on test personnel or test equipment such as test vehicles.

### SUMMARY

According to a first aspect of the present invention, there is provided a radio-controlled device for driving a wheeled dummy vehicle along a trajectory, the device comprising attachment means for removably attaching the device to the dummy vehicle, a wheel, an electric motor having a rotor and a stator, and a radio receiver to control a rotational speed of the rotor relative to the stator by a radio signal, wherein the stator is connected to the attachment means and the rotor is connected to the wheel.

The individually controllable electric motors connected to the wheels of the wheeled dummy vehicle allow to steer the wheeled dummy vehicle by providing for individual rotational speeds of the electric motors. As the heading of the dummy vehicle can be controlled via the rotational speeds of the electric motors, a frame of the dummy vehicle to which the wheels are removably attached can be maintained simple, as no steerability of the wheels is required. Thus, a frame of the wheeled dummy vehicle to which the wheels are attached can be efficiently manufactured.

The wheel preferably comprises a first circle-shaped side, which is at least partially covered by a compressible layer.

By providing a compressible layer on the side of the wheel, a risk for test personnel and equipment can be reduced because the compressible layer protects test personnel and equipment in case of collisions.

The attachment means preferably comprise a recess or through hole at a center of the wheel.

Thus, the device can be directly mounted to an axle of the wheeled dummy vehicle which further reduces the requirements imposed onto the frame of the wheeled dummy vehicle.

The device preferably further comprises a battery for powering the electric motor and the radio receiver.

Hence, all electronic components required for driving the wheeled dummy vehicle along the trajectory are integrated into the wheels which reduces the time required for preparing, maintaining or repairing the wheeled dummy vehicle, as electronic malfunctions can be overcome by replacing the wheels. For example, if a battery of the device has to be charged, the device can be umnounted and replaced by another device, instead of deactivating the whole wheeled dummy vehicle for charging.

According to a second aspect of the present invention, there is provided a radio-controlled wheeled dummy vehicle, the vehicle comprising a frame at least partially covered by a compressible body, the frame comprising first and second attachment means, a first electric motor removably attached to the first attachment means and configured to drive a first wheel, a second electric motor removably attached to the second attachment means and configured to drive a second wheel, and a radio receiver to control a first rotational speed of the first electric motor.

In this regard, it is noted that the term "wheeled dummy vehicle" as used throughout the description and claims in particular refers to a vehicle that is not intended for transportation purposes of individuals or goods, but is designed to mimic a shape of such vehicles, e.g., motorbikes, cars, busses, trucks, etc. Moreover, the term "frame" as used throughout the description and claims in particular refers to a rigid or semi-rigid self-supporting structure. Furthermore, the term "compressible body" as used throughout the description and claims in particular refers to a body which is made of a resilient material, i.e., a material that has the tendency to re-expand in volume after having been compressed. Further, the term "attachment means" as used throughout the description and claims in particular refers to a means for mounting one component to another component. In addition, it is noted that the term "removably" as used throughout the description and claims in particular refers a design where a component can be mounted to and unmounted from another component without destructing one of the components or parts of the components.

The vehicle preferably further comprises a second radio receiver to control a second rotational speed of the second electric motor.

By being enabled to individually control the rotational speeds of the wheels, the wheeled dummy vehicle can be steered which allows to drive the wheeled dummy vehicle along two-dimensional trajectories.

The first and second wheels preferably comprise circle-shaped sides, which are at least partially covered by a compressible layer.

Thereby, a shock imposed by collisions with the wheels can be reduced.

The attachment means preferably extend into a recess or through hole at a center of the first and second wheel.

Thereby, the wheels can be directly mounted on an axle of the wheeled dummy vehicle.

The vehicle preferably further comprises a first battery for powering the first electric motor and the radio receiver and a second battery for powering the second electric motor.

Having an individual battery for each electric motor facilitates the design of the wheeled dummy vehicles as the batteries, motors and wheels from separate units that can be individually integrated, tested, maintained or replaced.

According to a third aspect of the present invention, there is provided a method of testing a driver assistance system, comprising attaching radio controlled wheels to a dummy vehicle comprising a frame at least partially housed within a compressible body and controlling a rotational speed of each wheel individually to drive the dummy vehicle along a trajectory.

In this regard, it is noted that the term "testing" as used throughout the description and claims in particular refers to testing the performance of a driver assistance system. Moreover, the term "driver assistance system" as used throughout the description and claims in particular refers to computer-implemented algorithms that inform or warn a driver in case of dangerous situations or temporarily or permanently control the vehicle dynamics (e.g., autonomous driving).

The method preferably further comprises transmitting a radio signal to the radio controlled wheels, the radio signal comprising a separate control message for each wheel of the dummy vehicle.

In this regard, it is noted that the term "control message" as used throughout the description and claims in particular refers to a coded indication of a set-point of a rotational speed of the wheel. By transmitting individual messages to control the rotational speeds of the wheels, replacing a wheel with another wheel is facilitated as messages to the remaining wheel(s) do not have to be reconfigured in terms of transmission frequency or receiver identification.

The method preferably further comprises assigning a position value to each wheel, the position value indicating a position of a wheel at the dummy vehicle and generating the control messages based on the assignment.

In this regard, it is noted that the term "position" as used throughout the description and claims in particular refers to an indication at which axle (e.g., front or rear) and at which side (e.g., left or right) of the wheeled dummy vehicle a wheel is mounted.

The dummy vehicle preferably comprises a radio receiver, which receives the radio signal and distributes the control messages to the wheels.

By transmitting the radio signal to one radio receiver allows putting the other receivers in a power saving mode, thereby reducing overall power consumption.

The radio receiver preferably distributes the control messages to the wheels by wire.

Having a wired connection between the wheels reduces a risk of interfering radio signals.

The method preferably further comprises determining that a connection to the radio receiver has been lost and rerouting the radio signal to another radio receiver of the vehicle.

Thus, availability of a radio connection to the wheeled dummy vehicle can be improved as failure of a single radio receiver can be compensated by other radio receivers that can be activated at demand.

### BRIEF DESCRIPTION OF THE DRAWINGS

Fig. 1 is a schematic view of a dummy vehicle in accordance with a preferred embodiment.
Fig. 2 is a schematic view of a radio-controlled device for driving a wheeled dummy vehicle in accordance with a preferred embodiment.
Fig. 3 is a schematic view of a dummy vehicle in accordance with another preferred embodiment.
Fig. 4 is a flow diagram of a method of testing a driver assistance system.

### DETAILED DESCRIPTION

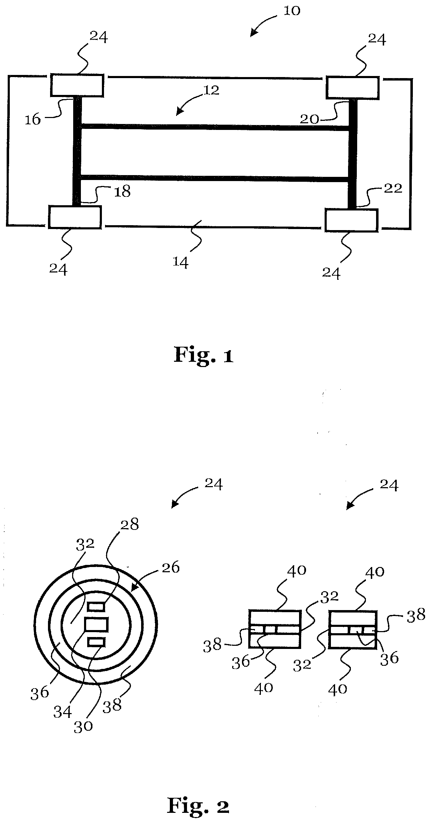

Fig. 1 is a schematic view of a dummy vehicle 10 in accordance with a preferred embodiment of the present invention. The dummy vehicle 10 comprises a frame 12, which is (partially) covered by a compressible body 14. The frame 12 is made of structural elements suitable for self-supporting the weight of the frame 12 and the compressible body 14. For example, the structural elements may be made of metal (e.g., steel), plastic or carbon fiber tubes or beams of suitable dimensions. The frame 12 may be made of a single piece or may be assembled from different components. The different components may be made of a same or of different materials. For example, the frame 12 may be made of welded steel tubes or beams or from a combination of steel and plastic or carbon fiber tubes or beams for weight reduction. As shown in Fig. 1, the frame 12 may comprise a first axle and a second axle which are parallel to each other. The axles may be connected to each other by parallel tubes or beams, thereby forming a double-H-structure when seen from above. However, it is clear that instead of parallel tubes or beams, the axels may also be connected by a single tube or beam or by non-parallel tubes or beams.

The compressible body 14 may be made of a foamed material such as polyethylene, polystyrene, polypropylene, polyurethane, polyvinyl chloride, etc. Moreover, the compressible body 14 may be (partially) wrapped in or covered by a reflective foil such as a metal foil (e.g., an aluminum foil) or a plastic foil coated with metal (e.g., copper, aluminum, gold, silver, tin, etc.) which reflects electromagnetic waves. When reflecting electromagnetic waves in the respective spectrum (e.g., 1-1000 THz or 50-150 GHz), the usability of the dummy vehicle 10 for testing lidar- or radar-based systems may be improved. Furthermore, the body 14 may be (partially) wrapped in or covered by a (printed) fabric or tarpaulin (e.g., made from polyethylene or canvas or polyester coated with urethane). The printed fabric or tarpaulin may show a view of a motorbike, a car, a bus, a truck, etc. This may improve the usability of the dummy vehicle 10 for testing camera-based systems. The reflective foil and the printed fabric or tarpaulin may form a two-layer cover or coating of the compressible body 14. The two-layer cover or coating of the compressible body 14 may be provided by a single (printed) fabric or tarpaulin (e.g., made from polyethylene or canvas or polyester coated with urethane) coated with metal (e.g., copper, aluminum, gold, silver, tin, etc.).

The frame 12 may further comprise first (front/right), second (front/left), third (rear/right) and fourth (rear/left) attachment means 16, 18, 20, 22 which are provided at respective ends of the axles. Removably attached to each of the attachment means 16-22 is a radio-controlled device 24 for driving the dummy vehicle 10 along a trajectory. As shown in Fig. 2, the device 24 comprises an electric motor 26, a radio receiver 28 and a battery 30 for powering the electric motor 26 and the radio receiver 28. The radio receiver 28 is adapted to receive control messages for controlling a rotational speed of the electric motor 26. For example, the radio receiver 28 may be an IEEE 802.11-compliant (WLAN) radio receiver 28 storing instructions which when executed by a processor of the radio receiver 28 configure the radio receiver 28 to receive control messages from a control unit and output a set-point signal to the electric motor 26. The electric motor 26 in turn may be configured to control its rotational speed in accordance with the set-point signal upon its receipt.

Optionally, the electric motor 26 may provide a measurement (feedback signal) regarding its current rotational speed to the radio receiver 28 and the radio receiver 28 may transmit this feedback to the control unit (e.g. a laptop computer featuring a control app) from which the set-point signal was received. The control unit may store a predefined trajectory and calculate appropriate rotational speeds of the wheels 38 or the motors 26 and transmit suitable control messages one or more of the devices 24. Moreover, if feedback is received from one or more of the electric motors 26, the electric motors 26 may be controlled to stop in case that a difference between the measurement and the set-point are above a threshold value. Moreover, the radio receivers 28 may be connected to each other by wire so that in case a radio connection between the control unit and a radio receiver 28 fails, messages can be re-routed via another radio receiver 28. Moreover, the control unit can be configured to select one of the radio receivers 28 for dispatching the control messages to all radio receivers 28 and select another radio receiver 28 in case that a signal strength received from the radio receiver 28 falls below a threshold.

The stator 32 of the electric motor 26 is connected to an attachment means 34 of the device 24. The attachment means 34 may comprise a through hole of rectangular (or quadratic) cross-sectional shape. This allows to push the device 24 onto an end of an axle having a fitting rectangular (or quadratic) cross-sectional shape but prevents the attachment means 34 from rotating around the axle. Moreover, the attachment means 34 and 16-22 may comprise an opening that allows inserting a piece (e.g., a screw or pin) that blocks the device 24 from being inadvertently removed from the respective attachment means 16-22. The rotor 36 of the motor 26 is connected to a wheel 38, thereby enabling control of the rotational speed of the wheel 38 via the control messages. The rotor 36 of the motor 26 may be directly connected to the wheel 38 or by a gear arrangement. The wheel 38 may be provided on both sides with a circle-shaped compressible layer 40, e.g., a foam, rubber or plastic layer. Moreover, the wheel 38 may be provided with attachment means for attaching the circle-shaped compressible layers 40 on both sides of the wheel 38.

The wheel 38 may be manufactured by plastic injection molding or 3D printing technology. The motor 26, the radio receiver 28 and the battery 30 may be integrated into recesses or cavities provided in the cast or printed wheel 38. Thus, the device 25 may be seen as a (3D printed) wheel 38 into which the electric motor 26, the radio receiver 28 and the battery 30 are integrated, thereby forming a modular unit that is attachable to the dummy vehicle 10 via the attachment means 34 and 16-22. This provides the advantage that in case of malfunction, a failing unit can be easily replaced by another unit, allowing a continued operation of the dummy vehicle 10 without further maintenance. Furthermore, although the dummy vehicle 10 shown in Fig. 1 has four (individually) powered wheels 38, it is clear that it could also have only three powered wheels 38 or only one or two powered wheels 38, preferably in combination with one or more nondriven wheels. For example, nondriven wheels may be manufactured on basis of a cast or printed wheel 38 in which a ball gearing (not shown) replaces the motor 26.

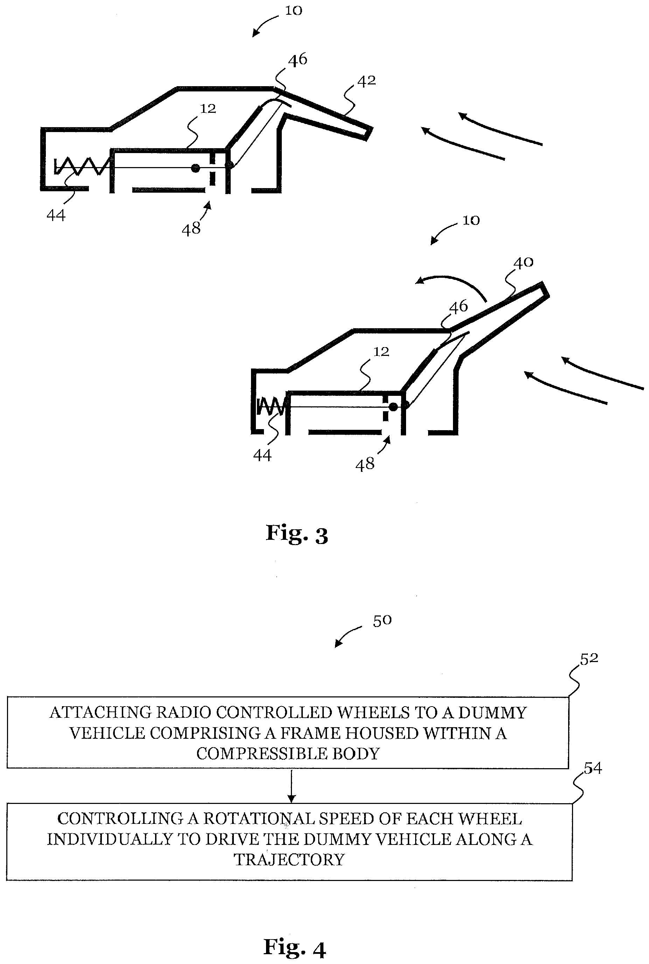

As shown in Fig. 3, the dummy vehicle 10 may be provided with a swingable wing 42 which is activated in case of collisions with a test vehicle to increase the wind resistance of the dummy vehicle 10. As shown in Fig. 3, the wing 42 is forced to point downward by a spring 44 that pulls a flexible member 46 which is integrated into the wing 42 downwards. In this position, wind resistance of the dummy vehicle 10 is low. However, in case of a collision, the spring 44 is compressed and the wing 42 swings up, thereby increasing the wind resistance and decelerating the dummy vehicle 10. An optional locking mechanism 48 avoids that the wing 42 is pulled down again due to the resilience of the spring 44. In case that the dummy vehicle 10 is (unwantedly) accelerated to high speeds due to a malfunction of a test vehicle, the wind resistance will flip the dummy vehicle 10 on top, allowing the test vehicle to "dive" below the dummy vehicle 10, thereby avoiding that the dummy vehicle 10 obstructs the sight or is dragged along with the test vehicle.

Fig. 4 is a flow diagram of a method 50 of testing a driver assistance system. At step 52, the method starts with attaching the wheels 38 to the dummy vehicle 10. At step 54, the method is continued with individually (i.e., on a wheel-by-wheel basis) controlling the rotational speed of each wheel 38 to drive the dummy vehicle 10 along the trajectory.

### LIST OF REFERENCE SIGNS

- 10: vehicle
- 12: frame
- 14: body
- 16-22: attachment means
- 24: device
- 26: motor
- 28: radio receiver
- 30: battery
- 32: stator
- 34: attachment means
- 36: rotor
- 38: wheel
- 40: compressible layer
- 42: wing
- 44: spring
- 46: flexible member
- 48: locking mechanism
- 50: flow diagram
- 52: process step
- 54: process step

## Claims

1. A radio-controlled device (24) for driving a wheeled dummy vehicle (10) along a trajectory, the device (24) comprising:
attachment means (34) for removably attaching the device (24) to the dummy vehicle (10);
a wheel (38);
an electric motor (26) having a rotor (36) and a stator (32); and
a radio receiver (28) to control a rotational speed of the rotor (36) relative to the stator (32) by a radio signal; wherein
the stator (32) is connected to the attachment means (34); and
the rotor (36) is connected to the wheel (38).

2. The radio-controlled device (24) of claim 1, wherein the wheel (38) comprises a first circle-shaped side which is at least partially covered by a compressible layer (40).

3. The radio-controlled device (24) of claim 1 or 2, wherein the attachment means (34) comprise a recess or through hole at a center of the wheel (38).

4. The radio-controlled device of any one of claims 1 to 3, further comprising a battery (30) for powering the electric motor (26) and the radio receiver (28).

5. A radio-controlled wheeled dummy vehicle (10), the vehicle (10) comprising:
a frame (12) at least partially covered by a compressible body (14), the frame (12) comprising first and second attachment means (16-22);
a first electric motor (26) removably attached to the first attachment means (16-22) and configured to drive a first wheel (38);
a second electric motor (26) removably attached to the second attachment means (16-22) and configured to drive a second wheel (38); and
a radio receiver (28) to control a first rotational speed of the first electric motor (26).

6. The radio-controlled wheeled dummy vehicle (10) of claim 5, further comprising a second radio receiver (28) to control a second rotational speed of the second electric motor (26).

7. The radio-controlled wheeled dummy vehicle (10) of claim 5 or 6, wherein the first and second wheels (38) comprise circle-shaped sides which are at least partially covered by a compressible layer (40).

8. The radio-controlled wheeled dummy vehicle (10) of any one of claims 5 to 7, wherein the attachment means (16-22) extend into a recess or through hole at a center of the first and second wheel (38).

9. The radio-controlled wheeled dummy vehicle (10) of any one of claims 5 to 8, further comprising a first battery (30) for powering the first electric motor (26) and the radio receiver (28) and a second battery (30) for powering the second electric motor (26).

10. A method (50) of testing a driver assistance system, comprising:
attaching (52) radio controlled wheels (38) to a dummy vehicle (10) comprising a frame (12) housed at least partially within a compressible body (14); and
controlling (54) a rotational speed of each wheel (38) individually to drive the dummy vehicle (10) along a trajectory.

11. The method (50) of claim 10, further comprising:
transmitting a radio signal to the radio controlled wheels (38), the radio signal comprising a separate control message for each wheel (38) of the dummy vehicle (10).

12. The method (50) of claim 11, further comprising:
assigning a position value to each wheel (38), the position value indicating a position of a wheel (38) at the dummy vehicle (10) and generating the control messages based on the assignment.

13. The method (50) of claim 11 or 12, wherein the dummy vehicle (10) comprises a radio receiver (28) which receives the radio signal and distributes the control messages to the wheels (38).

14. The method (50) of claim 13, wherein the radio receiver (28) distributes the control messages to the wheels (38) by wire.

15. The method (50) of claim 14, further comprising:
determining that a connection to the radio receiver (28) has been lost; and
rerouting the radio signal to another radio receiver (28) of the vehicle (10).

## Amended claims

### Amended claims in accordance with Rule 137(2) EPC.

1. A radio-controlled device (24) for driving a wheeled dummy vehicle (10) along a trajectory, the device (24) comprising:
attachment means (34) for removably attaching the device (24) to the dummy vehicle (10);
a wheel (38);
an electric motor (26) having a rotor (36) and a stator (32); and
a radio receiver (28) to control a rotational speed of the rotor (36) relative to the stator (32) by a radio signal; wherein
the stator (32) is connected to the attachment means (34); and
the rotor (36) is connected to the wheel (38);
**characterised in that** the radio-controlled device further comprises a battery (30) for powering the electric motor (26) and the radio receiver (28);
wherein the electric motor (26), the radio receiver (28), and the battery (30) are integrated into the wheel (38).

2. The radio-controlled device (24) of claim 1, wherein the wheel (38) comprises a first circle-shaped side which is at least partially covered by a compressible layer (40).

3. The radio-controlled device (24) of claim 1 or 2, wherein the attachment means (34) comprise a recess or through hole at a center of the wheel (38).

4. The radio-controlled device (24) of one of claims 1 to 3, wherein the radio receiver (28) is configured to receive a radio signal, the radio signal comprising a separate control message for each wheel (38) of the dummy vehicle (10), and distribute a corresponding control message to each of the wheels (38).

5. The radio-controlled device (24) of one of claims 1 to 4, wherein the electric motor (26), the radio receiver (28) and the battery (30) are integrated into recesses or cavities provided in the wheel (38).

6. A radio-controlled wheeled dummy vehicle (10), the vehicle (10) comprising:
a frame (12) at least partially covered by a compressible body (14), the frame (12) comprising first and second attachment means (16-22);
a first radio-controlled device (24) according to any of claims 1 to 5 removably attached to the dummy vehicle (10) via the first attachment means (16-22); and
a second radio-controlled device (24) according to any of claims 1 to 5 removably attached to the dummy vehicle (10) via the second attachment means (16-22).

7. The radio-controlled wheeled dummy vehicle (10) of claim 6, wherein the first and second wheels (38) comprise circle-shaped sides which are at least partially covered by a compressible layer (40).

8. The radio-controlled wheeled dummy vehicle (10) of any one of claims 65 to 7, wherein the attachment means (16-22) extend into a recess or through hole at a center of the first and second wheel (38).

9. The radio-controlled wheeled dummy vehicle (10) of any one of claims 5 to 8, further comprising a control unit configured to reroute a radio signal to one of the radio receivers (28) of the vehicle (10) upon determining that a connection to the other one of the radio receivers (28) has been lost or fallen below a threshold.

10. A method (50) of testing a driver assistance system, comprising:
attaching (52) one or more radio-controlled devices (24) according to one of claims 1 to 5 to a dummy vehicle (10) comprising a frame (12) housed at least partially within a compressible body (14); and
controlling (54) a rotational speed of each wheel (38) individually by controlling a rotational speed of the electric motor (26) of the respective radio-controlled device (24) to drive the dummy vehicle (10) along a trajectory.

11. The method (50) of claim 10, further comprising:
transmitting a radio signal to the radio controlled wheels (38), the radio signal comprising a separate control message for each wheel (38) of the dummy vehicle (10).

12. The method (50) of claim 11, further comprising:
assigning a position value to each wheel (38), the position value indicating a position of a wheel (38) at the dummy vehicle (10) and generating the control messages based on the assignment.

13. The method (50) of claim 11 or 12, wherein the dummy vehicle (10) comprises a radio receiver (28) which receives the radio signal and distributes the control messages to the wheels (38).

14. The method (50) of claim 13, wherein the radio receiver (28) distributes the control messages to the wheels (38) by wire.

15. The method (50) of claim 14, further comprising:
determining that a connection to the radio receiver (28) has been lost; and
rerouting the radio signal to another radio receiver (28) of the vehicle (10).
